# EUROPÄISCHE PATENTSCHRIFT

(11) **EP 4 407 155 B1**
(45) Veröffentlichungstag und Bekanntmachung des Hinweises auf die Patenterteilung: **08.07.2026**
(21) Anmeldenummer: 23212671.4
(22) Anmeldetag: 28.11.2023
(51) Int. Cl.: F01P 5/04, F01P 5/06, A01D 41/12, B60K 11/02, F01P 3/18, B60K 11/06, F01P 7/04

(54) **SELBSTFAHRENDE ERNTEMASCHINE**
SELF-PROPELLED HARVESTER
MOISSONNEUSE AUTOMOTRICE

(30) Priorität: 26.01.2023 DE 102023101878
(43) Veröffentlichungstag der Anmeldung: 31.07.2024
(73) Patentinhaber: CLAAS Selbstfahrende Erntemaschinen GmbH, 33428 Harsewinkel (DE)
(72) Erfinder: Renneke, Elmar, 33129 Delbrück (DE); Vorwerk, Norbert, 49078 Osnabrück (DE); Schnitger, Günter, 49163 Hunteburg (DE)
(74) Vertreter: CLAAS Gruppe

(56) Entgegenhaltungen:
- EP-A1- 3 361 066
- EP-B1- 1 570 725
- EP-B1- 1 662 111
- DE-A1- 102013 102 943
- US-A1- 2014 056 695
- US-B2- 7 384 234

## Beschreibung

Die vorliegende Anmeldung betrifft eine selbstfahrende Erntemaschine gemäß dem Oberbegriff von Anspruch 1.

Die Erntemaschine, die insbesondere in Form eines Feldhäckslers ausgebildet sein kann, umfasst einen Antriebsmotor, der typischerweise von einer Verbrennungskraftmaschine gebildet ist. Der Antriebsmotor dient unter anderem dazu, mindestens ein Arbeitsorgan der Erntemaschine zu betreiben sowie für einen Vortrieb der Erntemaschine auf einem Untergrund zu sorgen.

Der Antriebsmotor entwickelt während eines Betriebs der Erntemaschine Abwärme, die abgeführt werden muss. Daher umfasst die Erntemaschine ferner ein Kühlsystem zur Kühlung des Antriebsmotors. Das Kühlsystem umfasst wiederum einen Kühlkörper, der beispielsweise eine Vielzahl von Kühllamellen aufweisen kann, und einen Kühlventilator zur Erzeugung eines Kühlluftstroms. Der Kühlkörper ist in einem Gehäuse des Kühlsystems angeordnet, wobei das Gehäuse typischerweise eine Mehrzahl von Wandungen aufweist, die gemeinsam einen Innenraum des Gehäuses räumlich begrenzen, wobei der Kühlkörper in dem Innenraum des Gehäuses angeordnet ist.

Der Kühlventilator ist derart relativ zu dem Kühlkörper angeordnet, dass der mittels des Kühlventilators erzeugte Kühlluftstrom entlang des Kühlkörpers strömt und/oder den Kühlkörper durchströmt. Insbesondere kann der Kühlventilator an dem Gehäuse des Kühlsystems angeordnet sein.

Das Kühlsystem umfasst ferner einen Ventilatormantel zur räumlichen Einfassung des Kühlventilators. Der Ventilatormantel umgibt den Kühlventilator seitlich und trägt dazu bei, dass mittels des Kühlventilators ein gerichteter Kühlluftstrom erzeugbar ist. Hierzu kann der Kühlventilator beispielsweise einen Rotationskörper mit einer Mehrzahl von Ventilatorflügeln umfassen, die sich radial bezogen auf eine Nabe des Kühlventilators erstrecken. Der Rotationskörper ist um eine von der Nabe definierte Drehachse drehantreibbar gelagert, sodass mittels Drehantriebs des Rotationskörpers unter Wirkung der Ventilatorflügel ein gerichteter Luftstrom erzeugbar ist. Der Ventilatormantel kann unmittelbar oder mittelbar an dem Gehäuse gelagert sein. Bevorzugt ist der Ventilatormantel unmittelbar an dem Gehäuse gelagert, wodurch die Konstruktion des Kühlsystems insgesamt mit möglichst wenig Bauteilen ausgeführt werden kann.

Das Kühlsystem kann ferner eine Siebeinrichtung umfassen, die dem Kühlkörper vorgeordnet ist. Eine solche Siebeinrichtung ist dazu vorgesehen und eingerichtet, in dem Kühlluftstrom mitgeführte Schmutzpartikel zurückzuhalten und auf diese Weise an einer Weiterleitung zu dem Antriebsmotor zu hindern. Die Siebeinrichtung hat ferner den Vorteil, dass die Schmutzpartikel von dem Kühlkörper ferngehalten werden. Hierzu umfasst die Siebeinrichtung in aller Regel eine Siebfläche, die beispielsweise von einem Siebelement in Form eines engmaschigen Siebgitters gebildet sein kann. Im Zuge des Betriebs des Kühlsystems lagern sich an dem Siebelement sukzessive Schmutzpartikel ab.

Eine Erntemaschine der vorstehend beschriebenen Art ist im Stand der Technik bereits bekannt. Hierzu wird beispielhaft auf das Patent US 7,384,234 B2 hingewiesen. Dieses offenbart ein Kühlsystem, das einen Kühlventilator mit einem Ventilatormantel umfasst. Der Ventilatormantel ummantelt den Kühlventilator und erhöht so dessen Wirkungsgrad. Die Schwierigkeit besteht darin, den Kühlventilator und den Ventilatormantel zentrisch zueinander auszurichten, sodass Fertigungstoleranzen eingehalten werden und während eines Betriebs des Kühlventilators keine Kollision der Ventilatorflügel mit dem Ventilatormantel auftritt. Hierbei erhöht sich mit größer ausgebildeten Kühlventilatoren und damit einhergehenden verringerten Abständen des jeweiligen Ventilatormantels zu den Ventilatorflügeln die Leistungsfähigkeit des Kühlventilators. Entsprechend werden Kühlventilatoren zunehmend größer konstruiert, während die zugehörigen Ventilatormäntel unverändert bleiben. Hierdurch verringern sich notwendigerweise die zulässigen Fertigungstoleranzen betreffend den Kühlventilator und den Ventilatormantel, sodass Kollisionen der Ventilatorflügel und des Ventilatormantels ausgeschlossen werden können. Eine weitere Stellschraube zur Vermeidung solcher Kollisionen ist die präzise Ausrichtung des Kühlventilators bezogen auf den Ventilatormantel.

Um eine solche Ausrichtung zu ermöglichen, schlägt das genannte Patent vor, dass der Ventilatormantel mittels schlitzförmiger Aussparungen an die Position des Kühlventilators angepasst wird, um Kühlventilator und Ventilatormantel zueinander auszurichten. Hierbei soll ein Monteur den Ventilatormantel in den schlitzförmigen Aussparungen ausrichten. Nachteilig hieran ist, dass infolge der Abmessungen des Ventilatormantels eine passgenaue Ausrichtung der Bauteile zueinander kaum erreichbar ist.

Eine andere gattungsgemäße selbstfahrende Maschine ist in der EP3361066 A1 zu sehen.

Der vorliegenden Anmeldung liegt mithin die Aufgabe zugrunde, eine Erntemaschine bereitzustellen, bei dem die Ausrichtung von Kühlventilator und Ventilatormantel vereinfacht ist.

Die zugrundeliegende Aufgabe wird erfindungsgemäß mittels einer Erntemaschine mit den Merkmalen des Anspruchs 1 gelöst. Vorteilhafte Ausgestaltungen ergeben sich aus den zugehörigen Unteransprüchen.

Die Erntemaschine ist durch eine Ventilatorhalterung gekennzeichnet, die dazu vorgesehen und eingerichtet ist, den Kühlventilator relativ zu dem Ventilatormantel auszurichten. Die Ventilatorhalterung umfasst zwei miteinander zusammenwirkende Tragelemente, wobei ein erstes Tragelement den Kühlventilator trägt und mittels einer Mehrzahl von Verbindungsmitteln an dem zweiten Tragelement gelagert ist. Letzteres ist mittelbar oder unmittelbar in Kraft übertragender Weise an dem Gehäuse gelagert. Die Ableitung des Eigengewichts des Kühlventilators sowie etwaiger Betriebskräfte des Kühlventilators erfolgt mithin in das Gehäuse des Kühlsystems, wobei ein Kraftfluss ausgehend von dem Kühlventilator in das erste Tragelement, von dem ersten Tragelement in das zweite Tragelement und schließlich von dem zweiten Tragelement mittelbar oder unmittelbar in das Gehäuse stattfindet. Eine Veränderung der Lage des Kühlventilators im Raum und mithin relativ zu dem Ventilatormantel kann bei dieser Ausgestaltung besonders einfach mittels einer Relativbewegung des ersten Tragelements bezogen auf das zweite Tragelement erfolgen.

Im Unterschied zum Stand der Technik wird mithin nicht der Ventilatormantel bewegt, um letzteren bezogen auf den Kühlventilator auszurichten, sondern umgekehrt wird der Kühlventilator mittels der Ventilatorhalterung bewegt, um diesen bezogen auf den (bevorzugt feststehenden) Ventilatormantel auszurichten. Die Ventilatorhalterung kann hierbei insbesondere derart gestaltet sein, dass der Kühlventilator entlang zweier linear unabhängiger Bewegungsachsen in einer Ebene bewegbar ist, wobei bevorzugt diese Bewegungsachsen senkrecht zueinander ausgerichtet sind und gemeinsam die beschriebene Ebene aufspannen. Die eine Bewegungsachse kann insbesondere einer Vertikalen und die andere Bewegungsachse einer Horizontalen entsprechen.

Die erfindungsgemäße Erntemaschine hat viele Vorteile. Somit ist die Ausrichtung des Kühlventilators relativ zu dem Ventilatormantel gegenüber dem Stand der Technik deutlich vereinfacht, da auf eine Bewegung des Ventilatormantels, wie sie im Stand der Technik vorgenommen wird, verzichtet werden kann. Stattdessen wird lediglich der Kühlventilator solcher bewegt, wodurch eine präzise Ausrichtung zwischen den beiden Bauteilen vereinfacht ist. Bevorzugt ist der Ventilatormantel ortsfest angeordnet und gemäß vorstehender Erläuterung bevorzugt unmittelbar mit dem Gehäuse des Kühlsystems verbunden, innerhalb dessen sich der Kühlkörper befindet.

In bevorzugter Ausführung ist der Kühlventilator ortsfest an dem ersten Tragelement angeordnet und/oder das zweite Tragelement ist ortsfest relativ zu dem Gehäuse, bevorzugt unmittelbar an dem Gehäuse, angeordnet. Diese Ausgestaltung reduziert die Möglichkeiten zur Veränderung der Position des Kühlventilators im Raum, die gemäß vorstehender Erläuterung bevorzugt ausschließlich mittels einer Veränderung der Lage des ersten Tragelements bezogen auf das zweite Tragelement vorgenommen wird. Hierdurch ist die Ausrichtung des Kühlventilators relativ zu dem Ventilatormantel besonders einfach möglich, wobei ein Monteur, der die Ausrichtung vornimmt, lediglich an einer Stelle Veränderungen vornehmen muss, um die Ausrichtung vorzunehmen, nämlich an der Ventilatorhalterung.

Die Erntemaschine weiter ausgestaltend umfasst selbige eine Antriebseinrichtung zum Drehantrieb des Kühlventilators, wobei die Antriebseinrichtung beispielsweise von einem Hydraulikmotor gebildet sein kann. Die Antriebseinrichtung ist an dem ersten Tragelement der Ventilatorhalterung gelagert. Mithin ist bei dieser Ausgestaltung die Antriebseinrichtung gemeinsam mit dem Kühlventilator an dem ersten Tragelement gelagert. Eine Verlagerung des Kühlventilators relativ zu dem Ventilatormantel sowie global betrachtet innerhalb eines Maschinengehäuses der Erntemaschine führt bei dieser Ausgestaltung folglich nicht zu einer Relativbewegung zwischen dem Kühlventilator und der Antriebseinrichtung. Hierdurch ist die Bewegung des Kühlventilators im Raum vereinfacht. Sofern die Antriebseinrichtung von einem Hydraulikmotor gebildet ist, kann dieser besonders einfach mittels flexibler Hydraulikleitungen an ein übergeordnetes Hydrauliksystem angeschlossen sein, wobei diese Hydraulikleitungen ohne Weiteres einer Bewegung der Antriebseinrichtung folgen können.

Erfindungsgemäß weisen die Tragelemente miteinander korrespondierende Verbindungsbereiche auf. Die Verbindungsbereiche sind dazu vorgesehen und eingerichtet, jeweils mittels mindestens eines Verbindungsmittels miteinander verbunden zu werden. Hierbei können die Verbindungsmittel beispielsweise von Schraubbolzen gebildet sein, sodass die Tragelemente mittels der Verbindungsmittel miteinander verschraubt werden können. Diese Ausgestaltung hat den Vorteil, dass zwecks Veränderung einer Ausrichtung des Kühlventilators bezogen auf den Ventilatormantel lediglich ein wechselweises Lösen und Festziehen mindestens eines Verbindungsmittels erforderlich ist, wodurch eine Bewegung des einen Tragelements relativ zu dem anderen Tragelement vorübergehend freigegeben wird. Erfindungsgemäß sind ein Verbindungsbereich des ersten Tragelements und ein damit korrespondierender Verbindungsbereich des zweiten Tragelements mittels eines Verbindungsmittels miteinander verbunden, wobei zur Freigabe einer Bewegung des ersten Tragelements relativ zu dem zweiten Tragelement entlang einer Achse das Verbindungsmittel, das mit beiden korrespondierenden Verbindungsbereichen eingreift, gelöst wird, wodurch ein Freiheitsgrad entsteht und die Tragelemente relativ zueinander entlang einer Bewegungsachse bewegt werden können. Sobald eine gewünschte Position des ersten Tragelements relativ zu dem zweiten Tragelement erreicht ist, wird das Verbindungsmittel wieder festgezogen und die Tragelemente auf diese Weise relativ zueinander arretiert.

Ebenfalls ist es denkbar, dass die Bewegung der Tragelemente relativ zueinander nicht infolge einer temporären Freigabe eines oder mehrerer Freiheitsgrade erfolgt, sondern unmittelbar infolge einer Betätigung eines oder mehrerer Verbindungsmittel. Somit ist es denkbar, dass ein jeweiliges Verbindungsmittel, das mit miteinander korrespondierenden Verbindungsbereichen beider Tragelemente zusammenwirkt, derart eingerichtet ist, dass infolge seiner Betätigung die Tragelemente relativ zueinander bewegt werden. Dies kann beispielsweise mittels eines als Schraubbolzen ausgebildeten Verbindungsmittels erreicht werden, das mittels eines Gewindeabschnitts mit einem komplementären Gewindeabschnitt des Verbindungsbereichs eines der Tragelemente eingreift und drehfrei mit dem Verbindungsbereich des anderen Tragelements zusammenwirkt. Eine erzwungene Drehbewegung des Verbindungsmittels führt daraufhin zu einer Bewegung des einen Verbindungsbereichs infolge des kämmenden Eingriffs der komplementären Gewindeabschnitte, während der andere Verbindungsbereich infolge der drehfreien Lagerung an dem Verbindungsmittel in seiner Position unverändert bleibt. Im Ergebnis findet eine gewünschte Relativbewegung zwischen den Verbindungsbereichen (aufeinander zu oder voneinander weg) und mithin zwischen den Tragelementen statt, wobei - in diesem Beispiel - die Relativbewegung entlang einer Bewegungsachse erfolgt, die parallel zu einer Längsachse des Verbindungsmittels orientiert ist.

Bevorzugt weisen die Tragelement jeweils einen Verbindungsbereich für jeweils eine Bewegung entlang einer Bewegungsachse auf, entlang der die Tragelemente relativ zueinander bewegbar sein sollen. Insbesondere ist es folglich denkbar, dass erste miteinander korrespondierende Verbindungsbereiche beider Tragelemente vertikal und zweite miteinander korrespondierende Verbindungsbereiche beider Tragelemente horizontal orientiert sind.

Erfindungsgemäß ist das erste Tragelement in einem ersten Verbindungsbereich derart ausgebildet, dass bei Vorliegen des mindestens einen Verbindungsmittels, das dem ersten Verbindungsbereich zugeordnet ist, in einem Losezustand das erste Tragelement entlang einer ersten Bewegungsachse relativ zu dem zweiten Tragelement bewegbar ist. Beispielsweise kann der erste Verbindungsbereich hierzu mit mindestens einem Langloch ausgebildet sein, in das das Verbindungsmittel eingreift. Eine solche Ausgestaltung ist besonders gut dazu geeignet, eine Bewegbarkeit der beiden Tragelemente relativ zueinander herzustellen, indem ein Verbindungsmittel zumindest ein Stück weit gelöst wird, wobei bevorzugt ein vollständiges Entfernen des Verbindungsmittels von dem einen Tragelement und oder dem anderen Tragelement nicht erforderlich ist.

Analog kann es besonders vorteilhaft sein, wenn das zweite Tragelement in dem zweiten Verbindungsbereich derart ausgebildet ist, insbesondere mittels eines Langlochs, dass bei Vorliegen des mindestens einen Verbindungsmittels, das dem zweiten Verbindungsbereich zugeordnet ist, in einem Losezustand das zweite Tragelement entlang einer zweiten Bewegungsachse relativ zu dem ersten Tragelement bewegbar ist. Sofern die Verbindungsbereiche jeweils in der beschriebenen Weise ausgebildet sind, ist eine Bewegung der Tragelemente relativ zueinander entlang zweier linear unabhängiger Bewegungsachsen besonders einfach möglich. Entsprechend ist es zu bevorzugen, wenn die erste Bewegungsachse und die zweite Bewegungsachse nicht-parallel zueinander, jedoch beide parallel zu einer gemeinsamen Ebene orientiert sind. Bevorzugt definieren die beiden Bewegungsachsen senkrecht zueinander orientierte Bewegungsrichtungen. Wie vorstehend bereits dargelegt, ist es hierfür besonders vorteilhaft, wenn die erste Bewegungsachse einer Vertikalen und die zweite Bewegungsachse einer Horizontalen entsprechen.

Die beschriebene Ausgestaltung der Verbindungsbereiche mit Langlöchern ist auch dann vorteilhaft, wenn die Relativbewegung zwischen den Tragelementen gemäß vorstehender Erläuterung mittels unmittelbarer Betätigung eines jeweiligen Verbindungsmittels erfolgt. Hierbei können sich die beiden Tragelemente relativ zueinander bewegen, wenn sie in die Richtung, die mittels Betätigung des Verbindungsmittels bewirkt wird, "schwimmend" gelagert sind. Eine solche schwimmende Lagerung kann besonders gut mittels entsprechender Langlöcher in den Verbindungsbereichen realisiert sein, wobei bevorzugt die Verbindungsbereiche zur Freigabe der Relativbewegungen wechselseitig in den Verbindungsbereichen ausgebildet sind. Zur Bewegung des ersten Tragelements relativ zu dem zweiten Tragelement entlang einer ersten Bewegungsachse wird demzufolge beispielsweise ein Verbindungsmittel erster miteinander korrespondierender Verbindungsbereiche betätigt, dessen Längsachse parallel zu der ersten Bewegungsachse orientiert ist, wobei das Langloch oder die Langlöcher, die diese Bewegung ermöglichen, in den zweiten miteinander korrespondierenden Verbindungsbereichen ausgebildet sind und sich parallel zu der ersten Bewegungssachse erstrecken. Mit dem Verbindungsmittel der zweiten Verbindungsbereiche und der Ausbildung von Langlöchern in den ersten miteinander korrespondierenden Verbindungsbereichen verhält es sich entsprechend umgekehrt analog.

Sofern die Tragelemente die beschriebenen Verbindungsbereiche aufweisen, kann es des Weiteren besonders vorteilhaft sein, wenn die Verbindungsbereiche jeweils von abgekanteten Randabschnitten des jeweiligen Tragelements gebildet sind, wobei die Verbindungsbereiche in einem montierten Zustand der Ventilatorhalterung übereinanderliegend angeordnet sind. Auf diese Weise ist es besonders einfach möglich, die Verbindungsbereiche mittels mindestens eines Verbindungsmittels miteinander zu verbinden, insbesondere unter Ausbildung eines Formschlusses. Vorzugsweise sind die Verbindungsbereiche des ersten Tragelements und die Verbindungsbereiche des zweiten Tragelements derart zueinander ausgerichtet, dass sie einander überlappen.

In einer weiterhin vorteilhaften Ausgestaltung sind die Tragelemente jeweils einstückig ausgebildet, wobei vorzugsweise die Tragelemente jeweils von geformten Stahlteilen gebildet sind. Als solche sind diese besonders gut geeignet, einwirkende Kräfte aus Eigengewicht sowie infolge eines Betriebs des Kühlventilators zuverlässig in das Gehäuse des Kühlsystems abzuleiten. Zudem sind derartige Tragelemente aufgrund der hohen Steifigkeit des Werkstoffs Stahl ebenfalls besonders steif, sodass unbeabsichtigte Bewegungen des Kühlventilators relativ zu dem Ventilatormantel während eines Betriebs der Erntemaschine (und mithin während eines Betriebs des Kühlventilators) kaum oder bestenfalls gar nicht auftreten. In jedem Fall können die Bewegungen derart gering gehalten werden, dass das Risiko einer Kollision eines Ventilatorflügels mit dem Ventilatormantel nicht besteht.

Ferner kann eine solche Ausgestaltung besonders vorteilhaft sein, bei der das Kühlsystem einen Drehzahlsensor umfasst, der mit dem Kühlventilator wirkverbunden ist. Der Drehzahlsensor ist bei dieser Ausgestaltung an dem ersten Tragelement angeordnet, wobei das erste Tragelement bevorzugt über einen entsprechenden Halteabschnitt verfügt. Die sich hierdurch ergebenden Vorteile sind analog zu den vorstehend beschriebenen Vorteilen der Anordnung einer Antriebseinrichtung für den Kühlventilator an dem ersten Tragelement gegeben. Insbesondere ist die Ausrichtung des Kühlventilators bezogen auf den Ventilatormantel ohne Auswirkung auf eine Relativposition des Kühlventilators bezogen auf den Drehzahlsensor.

Schließlich kann eine solche Ausgestaltung vorteilhaft sein, bei der das erste Tragelement einen Fixierabschnitt aufweist, mittels dessen mindestens ein Kabel des Kühlsystems relativ zu dem ersten Tragelement fixierbar ist. Bei diesem Kabel kann es sich insbesondere um eine Datenleitung zur Verbindung eines Drehzahlsensors mit einer Anschlussstelle handeln. Der Fixierabschnitt bietet entsprechend den Vorteil, dass ein etwaiges Kabel infolge einer Bewegung des ersten Tragelements relativ zu dem zweiten Tragelement nicht versehentlich zu einer Klemmung oder Quetschung des Kabels führen kann. Stattdessen ist letzteres sicher mittels des Fixierabschnitt des an dem ersten Tragelement fixiert und befindet sich mithin in einer definierten Position.

Die Erfindung ist nachstehend anhand eines Ausführungsbeispiels, das in den Figuren dargestellt ist, näher erläutert. Es zeigt:
- Fig. 1:: Einen schematischen Querschnitt durch eine erfindungsgemäße Erntemaschine,
- Fig. 2:: Eine perspektivische Ansicht eines Kühlsystems der Erntemaschine gemäß Figur 1,
- Fig. 3:: Eine weitere perspektivische Ansicht des Kühlsystems gemäß Figur 2,
- Fig. 4:: Ein Detail einer Ventilatorhalterung zur Halterung eines Kühlventilators des Kühlsystems gemäß Figur 2,
- Fig. 5:: Ein weiteres Detail der Ventilatorhalterung gemäß Figur 4,
- Fig. 6:: Eine perspektivische Ansicht eines ersten Tragelements der Ventilatorhalterung gemäß Figur 4,
- Fig. 7:: Eine perspektivische Ansicht eines zweiten Tragelements der Ventilatorhalterung gemäß Figur 4,
- Fig. 8:: Ein Querschnitt durch die Ventilatorhalterung gemäß Figur 4.

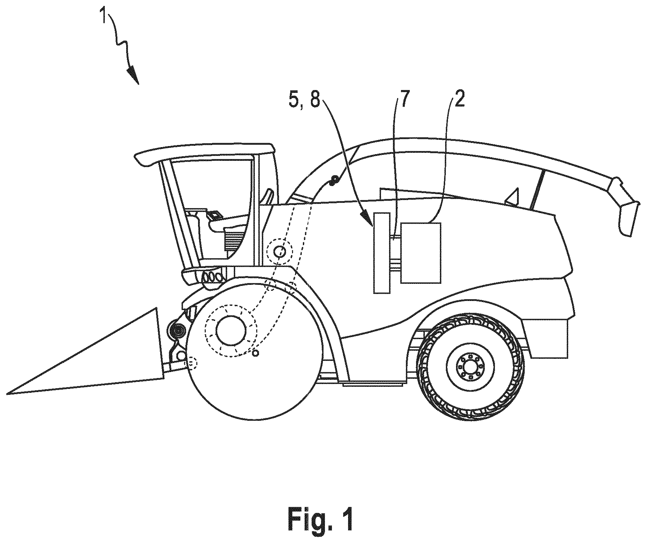

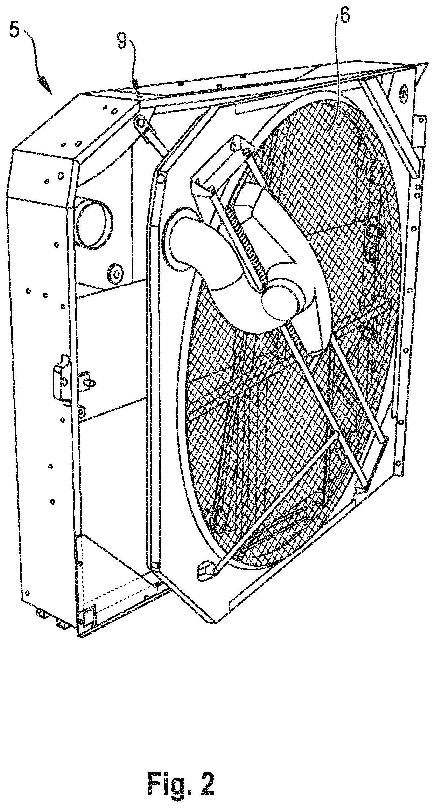

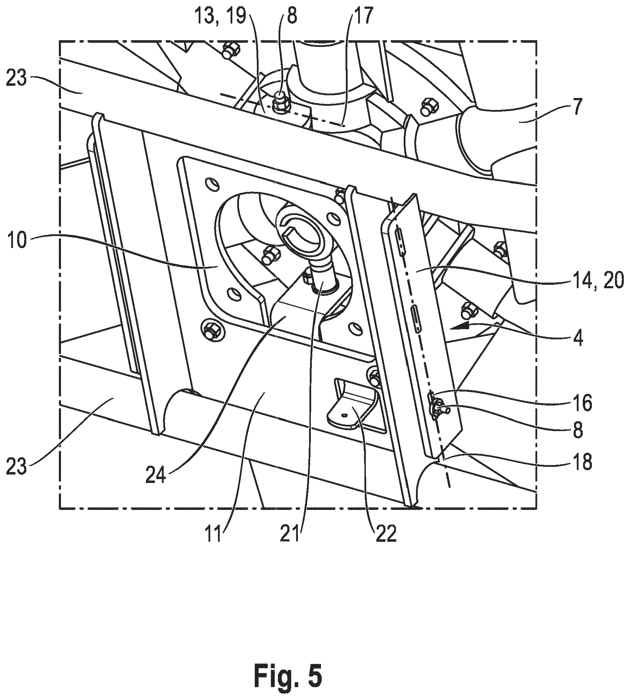

Ein Ausführungsbeispiel, das in den **Figuren 1 bis 8** dargestellt ist, umfasst eine erfindungsgemäße Erntemaschine **1,** die hier in Form eines selbstfahrenden Feldhäckslers ausgebildet ist. Die Erntemaschine **1** umfasst einen Antriebsmotor **2,** der hier von einer Verbrennungskraftmaschine gebildet ist.

Zur Kühlung des Antriebsmotors **2** verfügt die Erntemaschine **1** ferner über ein Kühlsystem **5,** das einen Kühlkörper **6,** einen Kühlventilator **7** und eine Siebeinrichtung **8** umfasst. Der Kühlventilator **7** ist zwischen dem Antriebsmotor **2** und dem Kühlkörper **6** angeordnet und ist dazu vorgesehen und eingerichtet, einen Kühlluftstrom zu erzeugen, der jenseits des Kühlkörpers **6** angesaugt wird und im Zuge des Betriebs des Kühlventilators **7** den Kühlkörper **6** durchströmt und auf diese Weise an dem Kühlkörper **6** anstehende Wärme abführt. Um sowohl den Antriebsmotor **2** als auch den Kühlkörper **6** vor der Verschmutzung mit Schmutzpartikeln zu schützen, die im Zuge eines Ernteprozesses unweigerlich in der Luft angereichert sind, ist das Kühlsystem **5** mit der Siebeinrichtung **8** ausgestattet, die ein Siebelement umfasst. Letzteres kann beispielsweise von einem engmaschigen Siebgitter gebildet sein.

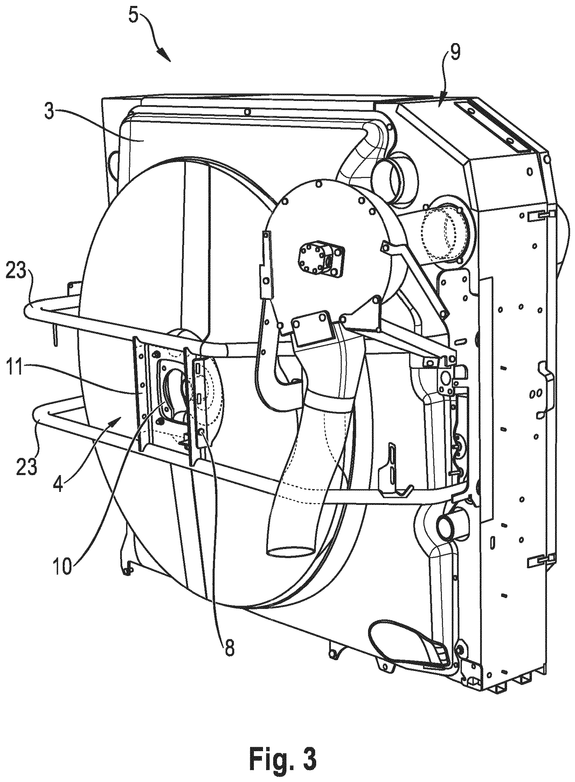

Der Kühlventilator **7** ist mittels eines Ventilatormantels **3** räumlich eingefasst. Dies ergibt sich besonders gut anhand von **Figur 3**. Der Ventilatormantel **3** umgibt den Kühlventilator **7,** sodass letzterer eingehaust ist. In dem gezeigten Beispiel ist der Ventilatormantel **3** unmittelbar an dem Gehäuse **9** des Kühlsystems **5** befestigt. Wie sich des Weiteren besonders gut anhand von **Figur 3** ergibt, verfügt das Kühlsystem **5** über zwei Tragrohre **23,** die sich jeweils in horizontale Richtung sowie parallel zueinander entlang des Ventilatormantels **3** erstrecken. Die Tragrohre **23** sind ihrerseits jeweils fest an dem Gehäuse **9** des Kühlsystems **5** gelagert. An den Tragrohren **23** ist eine Ventilatorhalterung **4** angeordnet, mittels der der Kühlventilator **7** gelagert ist. Entsprechend werden Kräfte, die durch den Kühlventilator **7** bedingt sind, ausgehend von dem Kühlventilator **7** in die Ventilatorhalterung **4** und von dort über die Tragrohre **23** in das Gehäuse **9** abgeleitet.

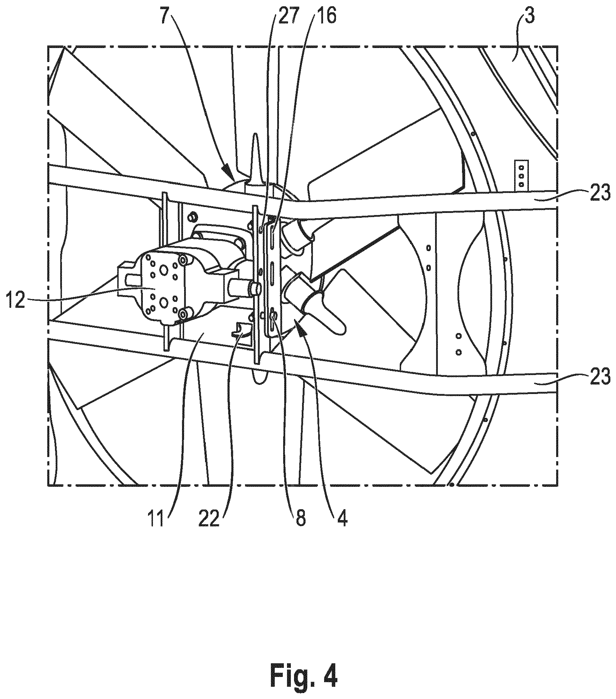

Die Ventilatorhalterung **4** verfügt in dem gezeigten Beispiel über zwei Tragelemente **10, 11,** die in Kraft übertragender Weise miteinander verbunden sind. Hierzu sind in dem gezeigten Beispiel die Tragelemente **10, 11** mittels einer Mehrzahl von Verbindungsmitteln **8** miteinander verbunden, wobei die Verbindungsmittel **8** jeweils von Schraubbolzen gebildet sind. Die Tragelemente **10, 11** in ihrer Zusammenwirkung sowohl mit dem Kühlventilator **7** als auch mit den vorstehend beschriebenen Tragrohren **23** ergeben sich besonders gut anhand von **Figur 4**. Demgemäß ist der Kühlventilator **7** unmittelbar an einem ersten Tragelement **10** gelagert, das wiederum mittels der Verbindungsmittel **8** in Kraft übertragender Weise an dem zweiten Tragelement **11** gelagert ist. Letzteres ist fest mit den Tragrohren **23** verbunden, sodass Kräfte, die auf das zweite Tragelement **11** einwirken, über die Tragrohre **23** in das Gehäuse **9** abgeleitet werden können.

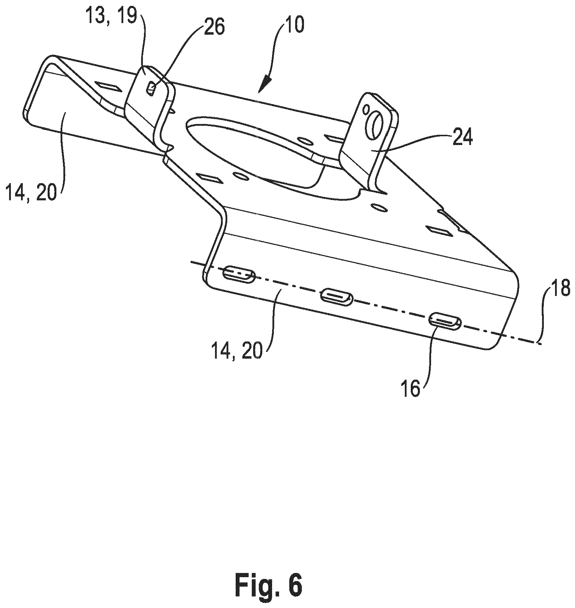

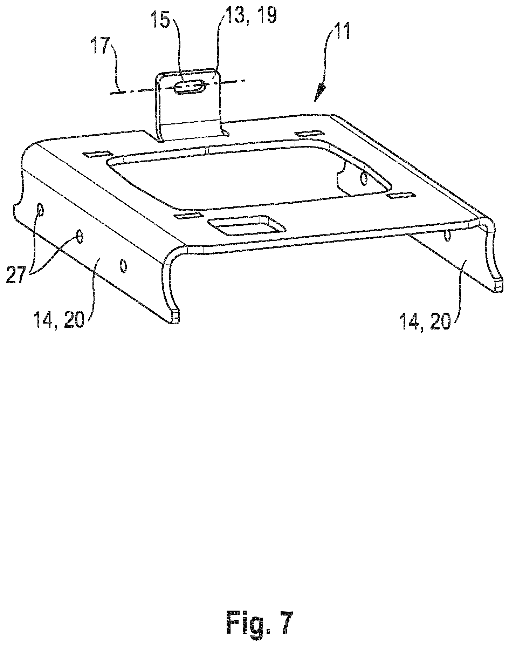

Die Besonderheit der Ventilatorhalterung **4** besteht darin, dass die Tragelemente **10, 11** relativ zueinander bewegbar sind. Hierzu verfügen die Tragelemente **10, 11,** die hier jeweils in Form von einstückigen Stahlteilen gebildet sind, jeweils über zwei Verbindungsbereiche **13, 14,** die miteinander korrespondierend ausgebildet sind. In dem gezeigten Beispiel sind die Verbindungsbereiche **13, 14** jeweils von abgekanteten Randabschnitten **19, 20** der Tragelemente **10, 11** gebildet, wobei diese Randabschnitte **19, 20** sich bei Vorliegen der Ventilatorhalterung **4** in einem montierten Zustand überlappen. Auf diese Weise können die Verbindungsbereiche **13, 14** besonders einfach mittels der Verbindungsmittel **8** miteinander verbunden werden. Hierzu weisen die Verbindungsbereiche **13, 14** wechselseitig entsprechende Ausnehmung auf, die mit den Verbindungsmitteln **8** zusammenwirken. Dies ergibt sich besonders gut anhand der **Figuren 6** **und** **7****.** In dem gezeigten Beispiel sind diese Ausnehmungen wechselseitig in dem zweiten Verbindungsbereich **14** des ersten Tragelements **10** und in dem ersten Verbindungsbereich **13** des zweiten Tragelements **11** als Langlöcher **15, 16** ausgebildet. Mithin wirkt jeweils ein Langloch **15, 16** in einem Verbindungsbereich **13, 14** eines jeweiligen Tragelements **10, 11** mit einer axialen Ausnehmung **26, 27** des jeweils korrespondierenden Verbindungsbereichs **13, 14** des jeweils anderen Tragelements **10, 11** zusammen und umgekehrt. Die Ausgestaltung der Ausnehmungen als Langlöcher 15, 16 ermöglicht es, dass die Tragelemente **10, 11** entlang von Bewegungsachsen **17, 18,** die durch die Ausrichtung der Langlöcher **15, 16** definiert sind, relativ zueinander bewegbar sind. Die Bewegungsachse **17, 18** sind hier derart relativ zueinander orientiert, dass sie jeweils parallel zu einer gemeinsamen Ebene orientiert sind und bei einer Projektion in dieser Ebene senkrecht zueinander orientiert sind.

Für eine Bewegung des ersten Tragelements **10** relativ zu dem zweiten Tragelement **11** entlang einer der Bewegungsachsen **17, 18** ist es in dem gezeigten Beispiel lediglich erforderlich, ein jeweiliges Verbindungsmittel **8** zu betätigen, wodurch die Bewegung der Tragelemente **10, 11** relativ zueinander ausgelöst wird. Hierbei kämmt das Verbindungsmittel **8** mit eines eigenen Gewindeabschnitts mit einem komplementären Gewindeabschnitt einer jeweiligen axialen Ausnehmung **26, 27,** wobei das Verbindungsmittel **8** in dem jeweils zugehörigen Langloch **15, 16** freidrehend gelagert ist. Entsprechend wird mittels der Drehung des Verbindungsmittels **8** eine Bewegung der Tragelemente **10, 11** in Richtung derjenigen Bewegungsachse **17, 18** bewirkt, die parallel zu einer Längsachse des Verbindungsmittels **8** orientiert ist. Die Tragelemente **10, 11** weisen infolge der jeweiligen Ausnehmungen als Langlöcher **15, 16** entlang beider Bewegungsachsen **17, 18** entsprechende Freiheitsgrade auf. Die Betätigung des jeweiligen Verbindungsmittels **8** kann beendet werden, wenn eine gewünschte Ausrichtung der beiden Tragelemente **10, 11** entlang der jeweiligen Bewegungsachse **17, 18** erreicht ist.

Da der Kühlventilator **7** an dem ersten Tragelement **10** gelagert ist, geht eine Verlagerung des ersten Tragelements **10** relativ zu dem zweiten Tragelement **11** mit einer entsprechenden Verlagerung des Kühlventilators **7** relativ zu dem Gehäuse **9** und mithin relativ zu dem Ventilatormantel **3** einher. Hierdurch ist die gewünschte Ausrichtung des Kühlventilators **7** relativ zu dem Ventilatormantel **3** besonders einfach möglich. Der Ventilatormantel **3** verbleibt hierbei durchgehend ortsfest an dem Gehäuse **9.** Dasselbe gilt für das zweite Tragelement **11,** das fest an den Tragrohren **23** gelagert ist und entsprechend seine Position bezogen auf den Ventilatormantel **3** bzw. das Gehäuse **9** nicht verändert.

Der Kühlventilator **7** ist in dem gezeigten Beispiel mittels einer Antriebseinrichtung **12** drehantreibbar, die hier von einem Hydraulikmotor gebildet ist. Damit eine Veränderung der Position des Kühlventilators **7** bezogen auf den Ventilatormantel **3** unabhängig von einer Position der Antriebseinrichtung **12** möglich ist, ist letztere in dem gezeigten Beispiel ebenfalls an dem ersten Tragelement **10** gelagert. Hierzu umfasst das zweite Tragelement **11** eine zentrale Ausnehmung, die eine Befestigung der Antriebseinrichtung **12** an dem ersten Tragelement **10** freigibt.

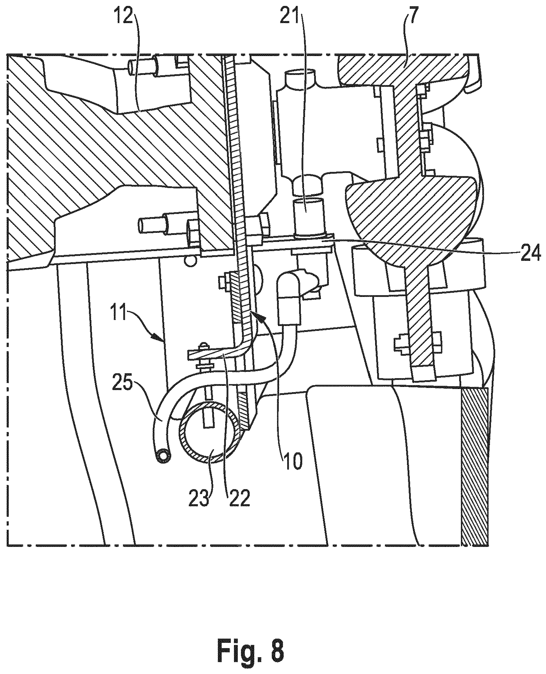

In dem gezeigten Beispiel weist das erste Tragelement **10** des Weiteren einen Halteabschnitt **24** auf, an dem ein Drehzahlsensor **21** des Kühlventilators **7** gelagert ist. Dies ergibt sich besonders gut anhand von **Figur 8****.**

In bevorzugter Weise ist in dem gezeigten Beispiel ferner das erste Tragelement **10** mit einem Fixierabschnitt **22** versehen, mittels dessen ein Kabel **25** des Drehzahlsensors **21** gelagert ist. Der Fixierabschnitt **22** ist ebenfalls in Form eines abgekanteten Abschnitts ausgebildet, sodass ein Befestigungsmittel zur Befestigung des Kabels **25** an dem Tragelement **10** angeordnet werden kann. Insbesondere erstreckt sich der Fixierabschnitt **22** senkrecht zu einer Hauptebene des ersten Tragelements **10** in Richtung auf das zweite Tragelement **11** zu, sodass der Fixierabschnitt **22** das untere Tragrohre **23** überlappt. Hierdurch ist die Möglichkeit eröffnet, dass das Befestigungsmittel zur Befestigung des Kabels **25** sowohl an dem Fixierabschnitt **22** als auch an dem Tragrohr **23** arretiert ist. Das Kabel **25** ist auf diese Weise besonders zuverlässig gelagert.

### Bezugszeichenliste

- 1: Erntemaschine
- 2: Antriebsmotor
- 3: Ventilatormantel
- 4: Ventilatorhalterung
- 5: Kühlsystem
- 6: Kühlkörper
- 7: Kühlventilator
- 8: Verbindungsmittel
- 9: Gehäuse
- 10: Tragelement
- 11: Tragelement
- 12: Antriebseinrichtung
- 13: Verbindungsbereich
- 14: Verbindungsbereich
- 15: Langloch
- 16: Langloch
- 17: Bewegungsachse
- 18: Bewegungsachse
- 19: Randabschnitt
- 20: Randabschnitt
- 21: Drehzahlsensor
- 22: Fixierabschnitt
- 23: Tragrohr
- 24: Halteabschnitt
- 25: Kabel
- 26: Ausnehmung
- 27: Ausnehmung

## Patentansprüche

1. Selbstfahrende Erntemaschine (1), insbesondere in Form eines Feldhäckslers, umfassend
- einen Antriebsmotor (2),
- ein Kühlsystem (5) zur Kühlung des Antriebsmotors (2),
das Kühlsystem (5) umfassend
- ein Gehäuse (9),
- einen in dem Gehäuse (9) angeordneten Kühlkörper (6),
- ein Kühlventilator (7) zur Erzeugung eines Kühlluftstroms entlang des Kühlkörpers (6),
- einen Ventilatormantel (3) zur räumlichen Einfassung des Kühlventilators (7),
wobei der Ventilatormantel (3) unmittelbar oder mittelbar an dem Gehäuse (9) gelagert ist,
**gekennzeichnet durch**
eine Ventilatorhalterung (4), die dazu vorgesehen und eingerichtet ist, den Kühlventilator (7) relativ zu dem Ventilatormantel (3) auszurichten,
wobei die Ventilatorhalterung (4) zwei miteinander wirkverbundene Tragelemente (10, 11) umfasst,
wobei ein erstes Tragelement (10) den Kühlventilator (7) trägt und mittels einer Mehrzahl von Verbindungsmitteln (8) an dem zweiten Tragelement (11) gelagert ist, das mittelbar oder unmittelbar in Kraft übertragender Weise an dem Gehäuse (9) gelagert ist, wobei die Tragelemente (10, 11) miteinander korrespondierende Verbindungsbereiche (13, 14) aufweisen, die dazu vorgesehen und eingerichtet sind, jeweils mittels mindestens eines Verbindungsmittels (8) miteinander verbunden, insbesondere miteinander verschraubt, zu werden, wobei das erste Tragelement (10) in dem ersten Verbindungsbereich (13) derart ausgebildet ist, insbesondere mittels eines Langlochs (15), dass bei Vorliegen des mindestens einen, dem ersten Verbindungsbereich (13) zugeordneten Verbindungsmittels (8) in einem Losezustand das erste Tragelement (10) entlang einer ersten Bewegungsachse (17) relativ zu dem zweiten Tragelement (11) bewegbar ist.

2. Selbstfahrende Erntemaschine (1) nach Anspruch 1, **dadurch gekennzeichnet, dass** der Kühlventilator (7) ortsfest an dem ersten Tragelement (10) angeordnet ist und/oder das zweite Tragelement (11) ortsfest relativ zu dem Gehäuse (9) angeordnet ist.

3. Selbstfahrende Erntemaschine (1) nach einem der vorhergehenden Ansprüche, **gekennzeichnet durch** eine Antriebseinrichtung (12) zum Drehantrieb des Kühlventilators (7), vorzugsweise in Form eines Hydraulikmotors, wobei die Antriebseinrichtung (12) an dem ersten Tragelement (10) gelagert ist.

4. Selbstfahrende Erntemaschine (1) nach Anspruch 1, **dadurch gekennzeichnet, dass** das zweite Tragelement (11) in dem zweiten Verbindungsbereich (14) derart ausgebildet ist, insbesondere mittels eines Langlochs (16), dass bei Vorliegen des mindestens einen, dem zweiten Verbindungsbereich (14) zugeordneten Verbindungsmittels (8) in einem Losezustand das zweite Tragelement (11) entlang einer zweiten Bewegungsachse (18) relativ zu dem ersten Tragelement (10) bewegbar ist.

5. Selbstfahrende Erntemaschine (1) nach den Ansprüchen 1 und 4, **dadurch gekennzeichnet, dass** die erste Bewegungsachse (17) und die zweite Bewegungsachse (18) nicht-parallel zueinander, jedoch beide parallel zu einer gemeinsamen Ebene orientiert sind, wobei vorzugsweise die erste Bewegungsachse (17) und die zweite Bewegungsachse (18) senkrecht zueinander orientierte Bewegungsrichtungen definieren.

6. Selbstfahrende Erntemaschine (1) nach einem der vorhergehenden Ansprüche, **dadurch gekennzeichnet, dass** die Verbindungsbereiche (13, 14) der Tragelemente (10, 11) jeweils von abgekanteten Randabschnitten (19, 20) des jeweiligen Tragelements (10, 11) gebildet sind, die in einem montierten Zustand übereinanderliegend angeordnet sind, wobei vorzugsweise die Verbindungsbereiche (13, 14) des ersten Tragelements (10) die Verbindungsbereiche (13, 14) des zweiten Tragelements (11) überlappen.

7. Selbstfahrende Erntemaschine (1) nach einem der vorhergehenden Ansprüche, **dadurch gekennzeichnet, dass** die Tragelemente (10, 11) jeweils einstückig ausgebildet sind, wobei vorzugweise die Tragelemente (10, 11) jeweils von geformten Stahlteilen gebildet sind.

8. Selbstfahrende Erntemaschine (1) nach einem der vorhergehenden Ansprüche, **dadurch gekennzeichnet, dass** das Kühlsystem (5) einen Drehzahlsensor (21) umfasst, der mit dem Kühlventilator (7) wirkverbunden ist, wobei der Drehzahlsensor (21) an dem ersten Tragelement (10) angeordnet ist.

9. Selbstfahrende Erntemaschine (1) nach einem der vorhergehenden Ansprüche, **dadurch gekennzeichnet, dass** das erste Tragelement (10) einen Fixierabschnitt (22) aufweist, mittels dessen mindestens ein Kabel (25) des Kühlsystems (5) relativ zu dem ersten Tragelement (10) fixierbar ist.

## Claims

1. Self-propelled harvesting machine (1), particularly in the form of a forage harvester, comprising
- a drive motor (2),
- a cooling system (5) for cooling the drive motor (2),
the cooling system (5) comprising
- a housing (9),
- a heat sink (6) arranged in the housing (9),
- a cooling fan (7) for generating a cooling air flow along the heat sink (6),
- a fan shroud (3) for spatially enclosing the cooling fan (7),
wherein the fan shroud (3) is mounted directly or indirectly on the housing (9),
**characterized by**
a fan mount (4) which is provided and configured to orient the cooling fan (7) relative to the fan shroud (3),
wherein the fan mount (4) comprises two supporting elements (10, 11) which are operatively connected to each other,
wherein a first supporting element (10) supports the cooling fan (7) and is mounted by means of a plurality of connecting means (8) on the second supporting element (11) which is mounted indirectly or directly on the housing (9) in a force-transmitting manner, wherein the supporting elements (10, 11) have connecting regions (13, 14) which correspond to each other and are provided and configured to be connected to each other by means of at least one connecting means (8), in particular screw-connected to each other, wherein the first supporting element (10) is formed, in the first connecting region (13), in such a way, in particular by means of an elongate hole (15), that when the at least one connecting means (8) associated with the first connecting region (13) is in a released state, the first supporting element (10) can be moved relative to the second supporting element (11) along a first movement axis (17).

2. Self-propelled harvesting machine (1) according to Claim 1, **characterized in that** the cooling fan (7) is arranged fixed in position on the first supporting element (10) and/or the second supporting element (11) is arranged fixed in position relative to the housing (9).

3. Self-propelled harvesting machine (1) according to either of the preceding claims, **characterized by** a drive device (12) for rotationally driving the cooling fan (7), preferably in the form of a hydraulic motor, wherein the drive device (12) is mounted on the first supporting element (10).

4. Self-propelled harvesting machine (1) according to Claim 1, **characterized in that** the second supporting element (11) is formed, in the second connecting region (14), in such a way, in particular by means of an elongate hole (16), that when the at least one connecting means (8) associated with the second connecting region (14) is in a released state, the second supporting element (11) can be moved relative to the first supporting element (10) along a first movement axis (18).

5. Self-propelled harvesting machine (1) according to Claims 1 and 4, **characterized in that** the first movement axis (17) and the second movement axis (18) are oriented non-parallel to each other, but both are oriented parallel to a common plane, wherein the first movement axis (17) and the second movement axis (18) preferably define movement directions oriented perpendicular to each other.

6. Self-propelled harvesting machine (1) according to any of the preceding claims, **characterized in that** the connecting regions (13, 14) of the supporting elements (10, 11) are each formed by bent-over edge portions (19, 20) of the respective supporting element (10, 11) which are arranged situated one above the other in an assembled state, wherein the connecting regions (13, 14) of the first supporting element (10) preferably overlap the connecting regions (13, 14) of the second supporting element (11).

7. Self-propelled harvesting machine (1) according to any of the preceding claims, **characterized in that** the supporting elements (10, 11) are each formed in one piece, wherein the supporting elements (10, 11) are preferably each formed by shaped steel parts.

8. Self-propelled harvesting machine (1) according to any of the preceding claims, **characterized in that** the cooling system (5) comprises a rotation speed sensor (21) which is operatively connected to the cooling fan (7), wherein the rotation speed sensor (21) is arranged on the first supporting element (10).

9. Self-propelled harvesting machine (1) according to any of the preceding claims, **characterized in that** the first supporting element (10) has a fixing portion (22) by means of which at least one cable (25) of the cooling system (5) can be fixed relative to the first supporting element (10).

## Revendications

1. Moissonneuse automotrice (1), en particulier sous la forme d'une ensileuse, comprenant
- un moteur d'entraînement (2),
- un système de refroidissement (5) destiné à refroidir le moteur d'entraînement (2),
le système de refroidissement (5) comprend
- un boîtier (9),
- un dissipateur thermique (6) disposé dans le boîtier (9),
- un ventilateur de refroidissement (7) destiné à générer un flux d'air de refroidissement le long du dissipateur thermique (6),
- une enveloppe de ventilateur (3) destinée à entourer spatialement le ventilateur de refroidissement (7),
l'enveloppe de ventilateur (3) étant montée directement ou indirectement sur le boîtier (9),
**caractérisée par**
un support de ventilateur (4) qui est prévu et conçu pour aligner le ventilateur de refroidissement (7) par rapport à l'enveloppe de ventilateur (3),
le support de ventilateur (4) comprenant deux éléments porteurs (10, 11) reliés fonctionnellement l'un à l'autre,
un premier élément porteur (10) portant le ventilateur de refroidissement (7) et étant monté au moyen d'une pluralité de moyens de liaison (8) sur le deuxième élément porteur (11), lequel est monté indirectement ou directement sur le boîtier (9) de manière à transmettre les forces, les éléments porteurs (10, 11) présentant des zones de liaison (13, 14) qui correspondent les unes aux autres, lesquelles sont prévues et conçues pour être reliées entre elles, en particulier vissées entre elles, respectivement au moyen d'au moins un moyen de liaison (8), le premier élément porteur (10) dans la première zone de liaison (13) étant configuré de telle sorte, notamment au moyen d'un trou oblong (15), que lorsque l'au moins un moyen de liaison (8) associé à la première zone de liaison (13) se trouve dans un état desserré, le premier élément porteur (10) peut être déplacé le long d'un premier axe de déplacement (17) par rapport au deuxième élément porteur (11).

2. Moissonneuse automotrice (1) selon la revendication 1, **caractérisée en ce que** le ventilateur de refroidissement (7) est disposé de manière fixe au niveau du premier élément porteur (10) et/ou le deuxième élément porteur (11) est disposé de manière fixe par rapport au boîtier (9).

3. Moissonneuse automotrice (1) selon l'une des revendications précédentes, **caractérisée par** un dispositif d'entraînement (12) destiné à entraîner en rotation le ventilateur de refroidissement (7), de préférence sous la forme d'un moteur hydraulique, le dispositif d'entraînement (12) étant monté sur le premier élément porteur (10).

4. Moissonneuse automotrice (1) selon la revendication 1, **caractérisée en ce que** le deuxième élément porteur (11) dans la deuxième zone de liaison (14) est configuré de telle sorte, notamment au moyen d'un trou oblong (16), que lorsque l'au moins un moyen de liaison (8) associé à la deuxième zone de liaison (14) se trouve dans un état desserré, le deuxième élément porteur (11) peut être déplacé le long d'un deuxième axe de déplacement (18) par rapport au premier élément porteur (10).

5. Moissonneuse automotrice (1) selon les revendications 1 et 4, **caractérisée en ce que** le premier axe de déplacement (17) et le deuxième axe de déplacement (18) sont orientés de manière non parallèle l'un à l'autre, mais tous deux parallèlement à un plan commun, le premier axe de déplacement (17) et le deuxième axe de déplacement (18) définissant de préférence des directions de déplacement orientées perpendiculairement l'une à l'autre.

6. Moissonneuse automotrice (1) selon l'une des revendications précédentes, **caractérisée en ce que** les zones de liaison (13, 14) des éléments porteurs (10, 11) sont respectivement formées par des portions de bord biseautées (19, 20) de l'élément porteur (10, 11) respectif, qui sont superposées dans un l'état monté, les zones de liaison (13, 14) du premier élément porteur (10) chevauchant de préférence les zones de liaison (13, 14) du deuxième élément porteur (11).

7. Moissonneuse automotrice (1) selon l'une des revendications précédentes, **caractérisée en ce que** les éléments porteurs (10, 11) sont respectivement réalisés d'une seule pièce, les éléments porteurs (10, 11) étant de préférence respectivement formés par des pièces en acier façonnées.

8. Moissonneuse automotrice (1) selon l'une des revendications précédentes, **caractérisée en ce que** le système de refroidissement (5) comprend un capteur de vitesse de rotation (21) qui est en liaison fonctionnelle avec le ventilateur de refroidissement (7), le capteur de vitesse de rotation (21) étant disposé sur le premier élément porteur (10).

9. Moissonneuse automotrice (1) selon l'une des revendications précédentes, **caractérisée en ce que** le premier élément porteur (10) possède une portion de fixation (22) au moyen de laquelle au moins un câble (25) du système de refroidissement (5) peut être bloqué par rapport au premier élément porteur (10).
